# EUROPÄISCHE PATENTSCHRIFT

(11) **EP 1 480 398 B1**
(45) Veröffentlichungstag und Bekanntmachung des Hinweises auf die Patenterteilung: **19.06.2013**
(21) Anmeldenummer: 04008041.8
(22) Anmeldetag: 02.04.2004
(51) Int. Cl.: H04L 12/58, H04W 4/12, H04L 12/14

(54) **Verfahren und Anordnung zur Etablierung eines kostenpflichtigen E-Mail-Dienstes**
Method and system for establishing a billable electronic mail service
Procédé et système pour établir un service courrier électronique payant

(30) Priorität: 19.05.2003 DE 10323097
(43) Veröffentlichungstag der Anmeldung: 24.11.2004
(73) Patentinhaber: Deutsche Telekom AG, 53113 Bonn (DE)
(72) Erfinder: Huber, Klaus, Dr., 64283 Darmstadt (DE); Saar, Eva, 64347 Griesheim (DE); Schaaf, Joachim, Dr., 64293 Darmstadt (DE)

(56) Entgegenhaltungen:
- WO-A-01/59650
- WO-A-98/39719
- JP-A- 2002 259 864
- US-A1- 2002 143 995
- US-A1- 2003 037 176
- US-A1- 2003 046 533
- PATEL A ET AL: "A technique for multi-network access to multimedia messages" COMPUTER COMMUNICATIONS, ELSEVIER SCIENCE PUBLISHERS BV, AMSTERDAM, NL, Bd. 20, Nr. 5, 1. Juli 1997 (1997-07-01), Seiten 324-337, XP004126688 ISSN: 0140-3664

## Beschreibung

Die Erfindung betrifft einen Filter für elektronische Nachrichten. Insbesondere betrifft die Erfindung einen Filter für SMS (short message service) und E-Mails, die über digitale Netze gesandt werden. SMS umfasst dabei das Versenden von schriftlichen Kurznachrichten mittels Handy an andere Mobilfunkteilnehmer, wobei die Nachrichten auf dem Display dargestellt werden oder auch akustisch abgerufen werden können.

### Gebiet der Erfindung:

Bei den heutzutage weit verbreiteten E-Mail-Diensten besteht bei vielen Kunden das Problem, dass sie mit E-Mail- und SMS-Flut überhäuft werden, die nur selten erwünscht ist (so genannte Spam-Mails). Dies entspricht im herkömmlichen Bereich einem Postkunden, dessen Briefkasten von Werbepost überquillt.

Ein weiterer Ansatz ist der Einsatz im E-Commerce. Beim E-Commerce kann ein Kunde bei einem Händler im Internet eine Ware bestellen und bekommt sie auf dem Versandweg oder digital geliefert. Die Schwierigkeit besteht dabei in der Bezahlung der Ware. Der Händler möchte nicht gegen Rechnung liefern, der Kunde möchte nicht seine Kontoverbindung oder seine Kreditkartennummer preisgeben, die Kreditkarteninstitute möchten nicht mit kleinen Händlern zusammenarbeiten etc.

Aus der US 2002 0143995 ist ein Verfahren bekannt, um SMS per Email zu verschicken. Zur Abrechnung des Dienstes wird der Inhalt der Email auf ein gültiges Ticket geprüft. Falls das Ticket, das im Vorfeld erworben werden musste, gültig ist, so erfolgt die Umwandlung der Email zu einer SMS.

Aus der US 2003/0037176 ist ein Verfahren bekannt, ums MMS zwischen Komponenten eines Netzwerkes auszutauschen. Hierbei wird die MMS vom Relay zu einem SCP/PSE gesendet bzw. umgekehrt in dem ein CAMEL Application Part Protokoll verwendet wird (CAP). Die durchgeführten Transaktionen führen zu Kosten, die an ein Billing-System weitergereicht werden.

Die WO 98/39719 zeigt ein Verfahren zur Bestimmung der Auslastung eines Netzwerkes über das verschlüsselte Daten gesendet werden, um anhand dieser Informationen die Höhe der Gebühren zu berechnen.

Die US 2003/0046533 A1 offenbart ein verfahren zur verschlüsselung von Daten und dem Austausch dieser Schlüssel.

Aufgabe der Erfindung ist es, die genannten Probleme zu lösen durch einen geeigneten Einsatz eines E-Mail-/SMS-Übertragungssystems.

### Lösung der Aufgabe:

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet.

Eine Lösung für diese Probleme besteht darin, dass die Zustellung von elektronischer Post kostenpflichtig gemacht wird. D. h. der Sender, der zu der kostenpflichtigen E-Mail-Adresse des Empfängers Daten schicken möchte, muss dafür bezahlen, dass diese Daten tatsächlich an den Empfänger geschickt werden. Der hierfür nötige Preis wird dabei an den Empfänger und/oder den Betreiber dieses kostenpflichtigen Dienstes entrichtet.

Ähnlich wie bei frankierten Briefen in einem Briefkasten hält sich die Anzahl der unerwünscht zugestellten E-Mails aufgrund der Kosten in Grenzen, so dass es sich bei kostenpflichtigen E-Mails ebenfalls vorwiegend um erwünschte bzw. für den Empfänger wichtige E-Mails handelt.

Als weiteres Einsatzgebiet kann die Erfindung zum Abrechnen einer Ware durch die Bezahlung des E-Mail-Versendens benutzt werden. Der Sender ist dabei der Käufer, der Empfänger bzw. der Diensteanbieter der Händler. Der Händler hat den Vorteil, dass er in der bevorzugten Ausführungsform, bei der die Abrechnung über einen Diensteanbieter erfolgt, nur mit diesem abrechnen muss und nicht mit einzelnen, verschiedenen Kunden.

### Detaillierte Beschreibung:

Bei der vorliegenden Erfindung handelt es sich um ein Verfahren zur Steuerung eines E-Mail-Verkehrs oder SMS-Verkehrs, mit einem E-Mail-Server oder SMS-Server, das mit einem Online-Buchungssystem verbunden ist. Unter einem Online-Buchungssystem ist auch ein Bezahlsystem zu verstehen, wie es für Internet-Geld oder Internet-Briefmarken bekannt ist oder für andere Informationen, die einen Geldbetrag symbolisieren. Diese Systeme haben die Aufgabe zu überprüfen, ob und in welcher Höhe ein Geldbetrag zu entrichten ist. Hierdurch wird sichergestellt, dass ein tatsächlicher Geldbetrag zwischen dem E-Mail-Sender und dem Empfänger bzw. dem Dienstleister fließt. Es wird jedoch darauf hingewiesen, dass nicht unbedingt ein Geldfluss stattfinden muss. Vielmehr ist es möglich, dass digitale Informationen gespeichert werden, die Ansprüche darstellen, die zu einem späteren Zeitpunkt in monetäre Transaktionen umgewandelt werden oder die gegeneinander aufgerechnet werden. Als Online-Buchung ist somit jegliche digital gespeicherte Information zu betrachten, die einen Anspruch darstellt.

Nachdem überprüft wurde, ob eine Transaktion durchgeführt wurde, entscheidet das System, ob die E-Mails und/oder SMS empfangen oder abgewiesen werden. Soweit keine positive Bestätigung für eine Transaktion vom Buchungssystem gegeben wurde, wird die E-Mail nicht akzeptiert. Wenn jedoch eine positive Buchung vorliegt, so wird die E-Mail empfangen und ggf., je nachdem ob entsprechende Regeln aufgestellt wurden, weitergeleitet. Damit eine Transaktion stattfinden kann, ist anhand der E-Mail oder SMS eine fälschungssichere Identität festzustellen. Unter dieser Identität kann ebenfalls ein Internet-Geld oder eine Internet-Briefmarke verstanden werden, bei denen es sich um verschlüsselte Informationen handelt, die durch einen monetären Geldtransfer dem Zahlenden bereitgestellt wurden und die nach der Benutzung, d. h. nach der Zahlung, ihren Wert verlieren. Es wird eingehend darauf hingewiesen, dass eine Identität somit nicht unbedingt an eine Person gebunden ist, sondern kann auch die Identität einer digitalen Information umfassen. Es ist auch denkbar, dass durch die Benutzung dieser Informationen eine monetäre Transaktion ausgeführt wird, da erkennbar ist, wer der Benutzer der Information ist. Das Online-Buchungssystem überprüft somit die Werthaltigkeit der übertragenen Informationen. D. h., das Online-Buchungssystem führt entweder eine monetäre Transaktion aus oder überprüft, ob eine Transaktion in der Vergangenheit ausgeführt wurde, um dann die verwendeten Informationen (z. B. eine digitale Briefmarke) zu entwerten.

Bei konventionellen Online-Buchungen, bei denen ein monetärer Geldfluss stattfindet, werden EC-Karten oder Kreditkarten-Informationen verwendet, die vorzugsweise verschlüsselt übertragen werden oder auf die der Zugriff ermöglicht wird durch Zustellung einer Zugriffsinformation.

Diese Überprüfung der Werthaltigkeit kann ebenfalls aufgrund einer in der E-Mail übertragenen Signatur erfolgen. Hierbei ist die Signatur entweder dem E-Mail-Server oder dem Online-Buchungssystem bekannt. In der bevorzugten Ausführungsform besteht eine Schnittstelle zu einem Trust-Center, das die Signaturen verwaltet.

In einer weiteren Ausführungsform wird eine vorzugsweise verschlüsselte Transaktionsnummer übertragen, anhand derer die Identität bestimmt wird. Diese Nummern werden vom Diensteanbieter bereitgestellt und dem Nutzer übermittelt. Die Transaktionsnummer ist unmittelbar mit einer hinterlegten Identität verknüpft.

Zur Vermeidung von weitergehenden Manipulationen kann auch eine fälschungssichere E-Mail-Adresse verwendet werden, wobei ein fälschungssicherer E-Mail-Server verwendet wird, der Authentifizierung verwendet und vorzugsweise eine starke Verschlüsselung einsetzt.

Die Bestimmung der Höhe der Buchung kann sich aus der Analyse von unterschiedlichen Informationen ergeben. So können die Empfängeradresse, die Absenderadresse oder der Inhalt der E-Mail die Höhe der Buchung bestimmen. Sollten z. B. bestimmte Schlagwörter verwendet werden, durch die ausgedrückt wird, welches Produkt zu erwerben ist, so bestimmt sich der Wert nach diesen Schlagwörtern. Andere Aspekte für die Höhe der Online-Buchung sind ebenfalls denkbar.

Zur Sicherstellung, dass keine Transaktion durchgeführt wird, die in ihrer Höhe nicht angemessen ist, wird in einer bevorzugten Ausführungsform nach dem Empfang einer E-Mail durch den E-Mail-Server eine Antwort-Mail gesandt, auf die entweder erneut zur. Bestätigung oder zum Widerruf geantwortet werden kann, wobei eine Transaktion in Abhängigkeit der Reaktion bearbeitet wird. Hierdurch wird sichergestellt, dass keine unnötigen Transaktionen stattfinden. Die erneute Bestätigung kann entweder durch erneutes Senden der E-Mail mit einem Schlagwort oder an eine bestimmte E-Mail-Adresse oder durch Anklicken eines WWW-Links erreicht werden, der eine sichere Verbindung zu einem entsprechenden Web-Server herstellt, der mit dem E-Mail-/SMS-Server zusammenarbeitet. Es wird darauf hingewiesen, dass entsprechende Verfahrensschritte für SMS oder MMS durchgeführt werden können. Hierbei soll klargestellt werden, dass sich die Erfindung sowohl auf SMS- als auch MMS-Anwendungen erstrecken kann.

Ein weiterer Bestandteil der Erfindung ist eine Filtereinheit, die auf dem E-Mail-Server installiert ist, und die anhand von Datenbanken oder Methoden die eingehenden Nachrichten filtert, um diejenigen Nachrichten (E-Mails, SMS oder MMS) herauszufiltern und zu bestimmen, für die eine Online-Buchung durchzuführen ist. Hierbei ist es auch denkbar, dass die abrufbaren Informationen senderabhängig sind, dass beispielsweise der Empfänger dem Diensteanbieter von vornherein eine Liste von Sendern bekannt gibt, die die kostenpflichtigen E-Mail-Dienste prinzipiell nur nutzen können. Die Einschränkungen, Regeln und Vorrichtungen, die die Zustellung von E-Mails bestimmen, werden als Filter bezeichnet.

In der bevorzugten Ausführungsform werden die Filterregeln durch einen Besitzer der E-Mail-Adresse bestimmt, wobei dieser die Filterregeln vorzugsweise über ein Web-Interface oder durch das Versenden von E-Mails mit Filterregeln an den E-Mail-Server oder durch ein Client-Programm bestimmt. Hierdurch kann der Besitzer der E-Mail-Adresse Schlagwörter oder Absenderadressen festlegen, für die Kosten entstehen oder gerade nicht entstehen. Somit kann die Adresse auch für den regulären E-Mail-Verkehr verwendet werden, ohne dass eine zu große Belastung mit unerwünschten Informationen erfolgt. So können z. B. Schlagwörter verteilt werden, die sicherstellen, dass eine E-Mail immer weitergeleitet wird, ohne Kosten zu erzeugen.

In einer weiteren Anwendungsform kann der E-Mail-Server auch als Bestell- und Bezahlserver für den E-Commerce verwendet werden. Hierbei werden durch die Sendung an eine bestimmte E-Mail-Adresse eine Bestellung und eine Bezahlung ausgelöst. So kann z. B. eine bestimmte E-Mail-Adresse für ein Produkt stehen. Durch die Möglichkeit, die Identität festzustellen, kann die Bezahlung eingeleitet werden und das Produkt an die angegebene Adresse übermittelt werden. In einer alternativen Ausführungsform wird durch die Verwendung eines Schlagwortes oder einer Bestellnummer innerhalb des E-Mail-Körpers ein Bestellvorgang eingeleitet. Die tatsächliche Bestellung wird jedoch erst nach der Online-Buchung an ein Bestellsystem und/oder Warenwirtschaftssystem weitergeleitet, das dann die Lieferung einleitet. Somit wird sichergestellt, dass eine Zahlung auch tatsächlich erfolgt. Der Einzug des Betrages kann z. B. durch den Telekommunikationsdienstleister erfolgen, der den Server betreibt und der den Betrag z. B. auf der Telefonrechnung ausweist. Somit kann das Abrechnungssystem des Dienstleisters eingesetzt werden.

Als zusätzliche Eigenschaft kann das System eine Datenbank mit Detailinformationen über die Nutzer des Dienstes bereitstellen, die die für die Nutzer des Dienstes benötigten Informationen über Anbieter und Empfänger offenbart, durch die ein Nutzer die zum Versand und zur Bezahlung einer kostenpflichtigen E-Mail nötigen Vorgänge einleiten kann oder Voraussetzungen erfahren kann.

Ein weiter Bestandteil der vorliegenden Erfindung ist eine Software, die vorzugsweise einen bestehenden E-Mail-Server dahingehend erweitert, dass E-Mails nur bei der Durchführung der Buchung weitergeleitet werden. Dies kann z. B. durch die Zwischenschaltung eines Filters erfolgen, der die E-Mails analysiert, die Buchung vornimmt und dann per SMTP (simple mail transfer protocol) weiterleitet oder eine Meldung an den Versender zurückschickt, dass eine Weiterleitung nicht möglich ist. SMTP stellt dabei ein einfaches Übertragungsprotokoll dar, das im Internet eine E-Mail an den E-Mail-Server des Empfängers transportiert. Der Einsatz eines solchen zwischengeschalteten Filters erfordert nur geringe Anpassungen beim E-Mail-Server.

In einer weiteren Ausführungsform wird das Verfahren direkt in den E-Mail-Server integriert, wodurch ein abgeschlossenes System entsteht. Im Wesentlichen wird jedoch das beschriebene Verfahren implementiert, wobei Filterungen in unterschiedlicher Weise auch im Postkasten selber erfolgen können.

Ein weiterer Bestandteil der Erfindung ist ein Datenträger für einen Computer, der eine Datenstruktur aufgenommen hat, die nach Laden in einen Speicher eines Computers das beschriebene Verfahren implementiert.

Noch ein weiterer Bestandteil der Erfindung ist ein Computersystem, das so eingerichtet ist, dass es den Ablauf des erfindungsgemäßen Verfahrens erlaubt. Ein wesentlicher Aspekt sind hierbei Netzwerkverbindungen, die es ermöglichen, auf ein Online-Buchungssystem zuzugreifen. Dieser Zugriff sollte online möglich sein, um ein zeitnahes Antwortverhalten sicherzustellen. Es ist jedoch auch denkbar, dass ein Batchlauf stattfindet, wodurch die Zustellung der Informationen jedoch verzögert wird.

Im Folgenden wird die Erfindung anhand von Ausführungsbeispielen näher erläutert, die in der Figur schematisch dargestellt ist. Gleiche Bezugsziffern in den einzelnen Figuren bezeichnen dabei gleiche Elemente. Im Einzelnen zeigt:

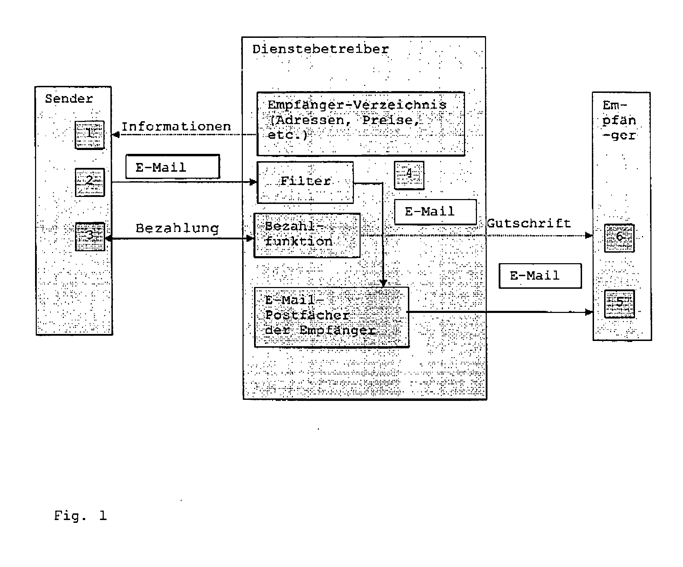

- Fig. 1: eine schematische Ansicht der Erfindung, wobei die Schritte der Kommunikation dargestellt wurden.

Im Rahmen der Erfindung sind zahlreiche Abwandlungen und Weiterbildungen der beschriebenen Ausführungsbeispiele verwirklichbar, die durch sinnvolle Kombination aller Merkmale in den Ansprüchen offenbart wird.

Die Etablierung eines kostenpflichtigen E-Mail-Dienstes erfordert beim Dienstanbieter notwendige Grunddienstleistungen. Bei diesem Dienstanbieter kann es sich beispielsweise um einen Telekommunikationsdienstleister handeln.

Die beiden Grundfunktionen, die dieser Dienstanbieter anbieten sollte, können wie folgt beschrieben werden:

Als erste Grundfunktion sollte der Dienstanbieter einen vom Empfänger sicher zugreifbaren Datenspeicher besitzen, auf dem die Daten und die E-Mails des Empfängers gespeichert werden.

Empfänger ist dabei eine Person oder Institution, die ein Vertragsverhältnis mit dem Dienstanbieter eingegangen ist und den kostenpflichtigen E-Mail-Dienst in Anspruch nimmt.

Als zweite Grundfunktion sollte der Dienstanbieter ein Bezahlverfahren bereitstellen können, damit der Sender für die Zustellung der E-Mail bezahlen kann. Ein Sender ist dabei eine Person oder Institution, die eine E-Mail an einen Empfänger (Kunde des Dienstanbieters) schicken möchte und dazu bereit ist, eine gewisse Summe für die Zustellung der E-Mai zu bezahlen.

Die hierfür aufgewendete Geldsumme kann je nach Vertragsbedingungen auf Dienstanbieter und/oder Empfänger verteilt werden.

Weitere Funktionen umfassen ein elektronisches Verzeichnis (Telefonbuch), das die Einträge von Empfänger-Daten für Sender bereithält. Dieses Verzeichnis enthält Daten, die der Sender abrufen kann, um eine kostenpflichtige E-Mail zu erstellen, zu bezahlen und um die E-Mail zuzustellen. Die Funktionen aus Figur 1 können wie folgt beschrieben werden:
1. Der Sender kann sich Informationen über den Empfänger bzw. über seine E-Mail-Adresse holen.
2. Der Sender sendet eine E-Mail an diese Adresse.
3. Der Dienstbetreiber erkennt, dass es sich um eine kostenpflichtige E-Mail handelt und wickelt einen Bezahlvorgang ab.
4. Der Dienstbetreiber stellt die E-Mail dem Empfänger zur Verfügung.
5. Der Empfänger holt sich die E-Mail beim Dienstbetreiber oder bekommt sie von ihm zugestellt.
6. Abhängig von der Anwendung bekommt der Empfänger den bezahlten Betrag (oder einen Teil davon).

In einem weiteren Fall kann die Erfindung als E-Commerce-System verwendet werden.

Der Käufer bestellt beim Händler eine Ware. Dann sendet er dem Händler eine E-Mail an dessen kostenpflichtige E-Mail-Adresse und muss dafür bezahlen. Dieses Geld erhält der Händler und liefert dafür die Ware.

Auch für kostenpflichtige Beratungen kann das System eingesetzt werden. Benötigt der Käufer eine kostenpflichtige Beratung, so kann dies ebenfalls über eine E-Mail erfolgen. Er sendet seine Frage per E-Mail an die kostenpflichtige E-Mail-Adresse des Händlers und zahlt dafür. Dieses Geld erhält der Händler und beantwortet dafür die Frage des Käufers.

Diese Lösung hat im Gegensatz zu den üblichen 0190-Nummern den Vorteil, dass die Kosten für den Käufer vorhersehbar sind, da er weiß, wie viel eine E-Mail kostet.

Ein weiterer Ansatz ist der digitale ,Fax-Abruf' durch Verwendung eines E-Mail-System.

Die Funktion des Fax-Abrufs ist bereits bekannt. Durch die Verwendung der vorliegenden Erfindung kann auf ähnliche Weise vorgegangen werden:
1. Der Käufer wählt sich auf der WWW-Seite des Händlers einen Bericht aus.
2. Er klickt darauf, der Link führt ihn zu einer E-Mail-Adresse. Dazu muss in der WWW-Seite des Händlers z. B. folgender Aufruf stehen:
   <a href-mailto:bericht2@haendler.de>Bericht 2</a>
3. Der Käufer sendet die E-Mail los.
4. Der Käufer bezahlt die E-Mail.
5. Der Händler sendet den Bericht per E-Mail an die AbsenderAdresse, d. h. an den Käufer.

Diese letzten Beispiele lassen sich einfach auf die vorliegende Darstellung der Erfindung in Figur 1 übertragen.

## Patentansprüche

1. Verfahren zur Steuerung eines digitalen Nachrichtenverkehrs, insbesondere eines E-Mail-Verkehrs und/oder SMS-/MMS-Verkehrs, mit einem Nachrichten-Server und einem Online-Buchungssystem, insbesondere einem E-Mail- und/oder SMS-/MMS-Server, umfassend folgende Schritte:
- Empfangen einer Nachricht von einem Versender,
- Bestimmung einer fälschungssicheren Identität des Absenders anhand der Informationen in der Nachricht;
- Bestimmung der Höhe der Gebühren anhand der Informationen in der Nachricht;
- Weiterleiten der Nachrichten in der gleichen Form an den Empfänger nur dann, wenn auf der Basis der Informationen in der Nachricht eine Online-Buchung unmittelbar in der bestimmten Höhe durchgeführt werden konnte, wobei anhand der Nachricht eine fälschungssichere Identität bestimmt und Transaktionsdetails bestimmt werden , anhand derer die Online-Buchung durchgeführt wird; **dadurch gekennzeichnet**, das
- nach dem Empfang einer Nachricht durch den Nachrichten-Server eine Antwort-Nachricht, insbesondere eine E-Mail, gesandt wird, auf die entweder erneut zur Bestätigung oder zum Widerruf geantwortet werden kann, wobei eine Transaktion in Abhängigkeit der Reaktion bearbeitet wird.

2. Verfahren nach dem vorhergehenden Anspruch, **dadurch gekennzeichnet, dass** die Nachricht signiert ist, wobei die Signatur entweder dem Nachrichten-Server und/oder dem Online-Buchungssystem bekannt ist.

3. Verfahren nach einem oder mehreren der vorhergehenden Ansprüche, **dadurch gekennzeichnet, dass** durch eindeutige personenbezogone Transaktionsnummern, die vorzugsweise verschlüsselt übertragen werden, die Identität bestimmt wird.

4. Verfahren nach einem oder mehreren der vorhergehenden Ansprüche, **dadurch gekennzeichnet, dass** die Nachricht von einer fälschungssicheren Nachrichten-Adresse stammt.

5. Verfahren nach einem oder mehreren der vorhergehenden Ansprüche, **dadurch gekennzeichnet, dass** die Online-Buchung mit Hilfe von Internet-Geld und/oder Kreditkarten-Buchungen und/oder EC-Karten-Buchungen und/oder kontobasierten Online-Buchungen und/oder von elektronischen Nachbildungen von Briefmarken vorgenommen werden.

6. Verfahren nach einem oder mehreren der vorhergehenden Ansprüche, **dadurch gekennzeichnet, dass** anhand der Empfängeradresse, der Absenderadresse und/oder des Inhalts der Nachricht die Höhe der Buchung bestimmt wird.

7. Verfahren nach einem oder mehreren der vorhergehenden Ansprüche, **dadurch gekennzeichnet, dass** der Nachrichten-Server auf Diensteanbieter, Datenbanken und/oder Methoden zum Filtern von Daten zugreift, die diejenigen Nachrichten herausfiltert und bestimmt, für die eine Online-Buchung durchzuführen ist.

8. Verfahren nach dem vorhergehenden Anspruch, **dadurch gekennzeichnet, dass** die Filterregeln durch einen Besitzer der Nachrichten-Adresse, insbesondere E-Mail-Adresse oder SMS-Adresse bestimmt werden können, wobei diese vorzugsweise über ein Web-Interface und/oder durch das Versenden von E-Mails an den Web-Server und/oder durch ein Client-Programm bestimmt werden.

9. Verfahren nach einem oder mehreren der vorhergehenden Ansprüche, **dadurch gekennzeichnet, dass** durch das Senden der Nachricht ein Online-Bestellvorgang ausgelöst wird, wobei die Bestellung erst nach der Online-Buchung an ein Bestellsystem und/oder Warenwirtschaftssystem weitergeleitet wird, das dann die Lieferung einleitet.

10. Verfahren nach einem oder mehreren der vorherigen Ansprüche, **dadurch gekennzeichnet, dass** in einer Datenbank, die für die Nutzer des Dienstes benötigten Informationen über Anbieter und Empfänger abgelegt sind, durch die ein Nutzer die zum Versand und zur Bezahlung einer kostenpflichtigen E-Mail oder SMS nötigen Vorgänge einleiten kann.

11. Software für einen Nachrichten-Server, insbesondere E-Mail-Server und/oder SMS-Server,
- die eine Schnittstelle zu einem Online-Buchungssystem bereitstellt,
- wobei Nachrichten, insbesondere E-Mails und/oder SMS, nur in der gleichen Form weitergeleitet werden, wenn eine Online-Buchung durchgeführt werden konnte, wobei anhand des Inhalts der Nachricht eine fälschungssichere Identität bestimmt wird und Transaktionsdetails bestimmt werden, und wobei auf der Basis der Informationen in der Nachricht die Online-Buchung unmittelbar in der durch den Inhalt der Nachricht bestimmten Höhe durchgeführt wird;
**dadurch gekennzeichnet, dass**
- nach dem Empfang einer Nachricht durch den Nachrichten-Server eine Antwort-Nachricht, insbesondere eine E-Mail, gesandt wird, auf die entweder erneut zur Bestätigung oder zum Widerruf geantwortel werden kann, wobei eine Transaktion in Abhängigkeit der Reaktion bearbeitet wird.

12. Computerprogramm mit einem Programmcode der alle Schritte des Verfahrens nach einem oder mehreren der vorhergehenden Verfahrensansprüche durchführt, wenn das Computerprogramm auf einem Computer ausgeführt wird.

13. Datenträger für einen Computer, auf dem ein Computerprogramm nach dem vorhergehenden Computerprogrammanspruch gespeichert ist.

14. Computersystem, **gekennzeichnet durch** eine Einrichtung, zur durchführung aller Schritte eines Verfahrens nach einem oder mehreren der vorhergehenden Verfahrensansprüche.

## Claims

1. A method for controlling digital communication traffic, preferably e-mail and / or SMS- /MMS- traffic, comprising a communication- server and an online booking system, preferably an email and / or SUMS- /MMS- Server, comprising the following steps:
- Receiving a message from a sender;
- Determination of a tamper- proof identity of the sender by using the information in the message;
- Determination of the amount of the fees, based on the information in the message;
- Forwarding of the messages in the same form to the recipient, only if on the basis of the information in the message an online booking could be performed immediately at the predetermined amount, wherein with the help of the message, the identity and transaction details can be safely determined and an online booking can be carried out; **characterized by**:
- After receiving a message by the message server a response message in particular an e- mail, is sent to which the receiver can reply for either confirmation or cancellation, the transaction is processed depending on the response.

2. A method according to the preceding claim, **characterized by** the message being signed, wherein the signature is either recognized by the communication- server and /or the online booking system.

3. A method according to one or more of the preceding claims, **characterized by** determining an identity via a unique personal transaction number, which is preferably encrypted when transmitted.

4. A method according to one or more of the preceding claims, **characterized by** the message being sent from a tamper- proof Message- Address.

5. A method according to one or more of the preceding claims, **characterized by** the online reservation being carried out by the means of internet money, and / or credit card bookings and / or debit card bookings and / or account- based online booking and / or the electronic replicas of stamps.

6. A method according to one or more of the preceding claims, **characterized by** determined according to the recipient's address, the sender's address and / or the content of the message the amount of the transaction.

7. A method according to one or more of the preceding claims, **characterized by** the communication- server gaining access to service providers, database and / or methods for filtering data, which determines and filters out those messages for which an online booking needs to be carried out.

8. A method according to the preceding claim, **characterized by** the filter rules can be determined by an owner of the message address, in particular an e- mail address or a text message address, whereby those are preferably determined via a web interface and / or by sending e- mails to the web server and / or through a client program.

9. A method according to one or more of the preceding claims, **characterized by** an online ordering process being triggered when a message is sent, wherein the order is forwarded only after the online booking to an ordering system and / or inventory control system, which then initiates the delivery.

10. A method according to one or more of the preceding claims, **characterized by** a database in which information about the provider and receiver is stored which is necessary in order to use the service, through which a user can initiate the process leading to a payable text message or email.

11. A software for a communication server, in particular e- mail server and / or SMS server
- which provides an interface to an online booking system
- whereby messages, in particular e- mail and / or SMS will be forwarded only in the same form, if an online reservation could be carried out, whereby on the basis of the content of a message a tamper- proof identity can be determined, and wherein on the basis of this information within the message the online booking is carried out immediately at the determined amount specified in the content of the message, which is **characterized by**:
- after the receipt of a message by the message server, a response message (preferably an email) is sent, which can be responded to in order to either confirm or cancel, wherein the transaction is processed according to the response.

12. A computer program with a program code which executes all steps of the procedure according to one or more of the proceeding claims, when the computer program is executed on a computer.

13. Data storage for a computer, onto which a computer program is saved, according to the preceding computer program claim.

14. A computer system which is **characterized by** a feature, to conduct all steps of a method according to one or more of the preceding claims.

## Revendications

1. Une méthode de commande d'un service de courrier électronique numérique, de préférence de type courriel et/ou SMS-/MMS, comportant un serveur de communication et un serveur de réservation en ligne, de préférence un serveur de courrier électronique et/ou SMS-/MMS , comportant les étapes suivantes :
- la réception d'un message émanant d'un émetteur ;
- la détermination d'une identité inviolable de l'émetteur au moyen d'une utilisation de l'information contenue dans le message ;
- la détermination d'un montant de taxes, basée sur l'information contenue dans le message ;
- le suivi des messages sous la même forme au destinataire, uniquement lorsque, sur la base de l'information contenue dans le message, peut être effectuée immédiatement une réservation en ligne pour un montant prédéterminé, dans laquelle avec l'assistance du message, les détails relatifs à l'identité et à la transaction peuvent être déterminée de manière sûre et qu'une réservation en ligne peut être effectuée,
**caractérisée par** :
- la transmission, à la suite de la réception d'un message par le serveur de message, d'un message de réponse en particulier un courriel auquel le récepteur peut répondre par soit une confirmation ou une annulation déterminant l'achèvement de la transaction.

2. Une méthode selon la revendication précédente, **caractérisée en ce que** le message est signé, dans lequel la signature est soit reconnue par le serveur de communication et/ou le système de réservation en ligne.

3. Une méthode selon l'une ou plusieurs des revendications précédentes, **caractérisée par** la détermination d'une identité via un numéro de transaction personnel unique, de préférence encrypté lors de la transmission.

4. Une méthode selon l'une ou plusieurs des revendications précédentes, **caractérisée en ce que** le message transmis est envoyé à partir d'une adresse de messagerie inviolable.

5. Une méthode selon l'une ou plusieurs des revendications précédentes, **caractérisée en ce que** la réservation en ligne est effectuée au moyen d'un règlement via Internet, et/ou de réservations par carte bancaire et/ou par cartes de paiement et/ou de réservations en ligne par débit de compte et/ou de réservations par copie de timbre.

6. Une méthode selon l'une ou plusieurs des revendications précédentes, **caractérisée par** la détermination du montant de la transaction en fonction de l'adresse du destinataire, l'adresse de l'émetteur et/ou le contenu du message.

7. Une méthode selon l'une ou plusieurs des revendications précédentes, **caractérisée en ce que** le serveur de communication obtient l'adresse de fournisseur d'accès, de bases de données et/ou de méthodes de filtrage de données, déterminant et filtrant ceux des messages pour lesquels une réservation en ligne apparaît nécessaire.

8. Une méthode selon l'une des revendications précédentes, **caractérisée en ce que** les règles de filtrage peuvent être déterminée par le propriété de l'adresse du message, en particulier une adresse courriel ou une adresse de message textuel, lesquelles sont de préférence détermination via une interface web et /ou par l'envoi de courriels au serveur web et/ou au travers un programme client.

9. Une méthode selon l'une ou plusieurs des revendications précédentes, **caractérisée par** un procédé de commande en ligne qui est déclenché lors de l'envoi d'un message, dans lequel la commande est transmise uniquement à la suite d'une réservation en ligne auprès d'un système de réservation et/ou un système de commande d'inventaire, lesquels lancent la l'acheminement.

10. Une méthode selon l'une ou plusieurs des revendications précédentes, **caractérisée par** une base de données dans laquelle est stockée l'information concernant le fournisseur et le récepteur , qui est nécessaire pour l'utilisation du serveur, au travers de laquelle un utilisateur peut engager le procédé conduisant à un message de texte ou un courriel payant.

11. Un logiciel pour un serveur de communication, par exemple un serveur de courrier électronique et/ou un serveur de SMS
- fournissant une interface à un système de réservation en ligne
- par lequel des messages, en particulier des courriels électroniques et/ou des SMS sont transmis dans la même forme uniquement lorsque peut être effectuée une réservation en ligne, par laquelle une identité inviolable peut être déterminée sur la base du contenu du message, et dans laquelle, sur la base de cette information contenue dans le message, la réservation en ligne est immédiatement mise en oeuvre pour un montant déterminé spécifié dans le contenu du message, qui est **caractérisé par** :
la transmission d'un message de réponse (de préférence un courriel) à la suite de la réception d'un message du serveur de message, dont la réponse - soit une confirmation ou une annulation - détermine le traitement de la transaction.

12. Un programme d'ordinateur comportant d'u code de programmation exécutant toutes les étape de procédure suivant l'une ou plusieurs de revendications précédentes, dans lequel le programme est exécuté sur un ordinateur.

13. Une mémoire de stockage pour un ordinateur, dans laquelle est sauvegardée un programme d'ordinateur selon la revendication précédente.

14. Un système informatique **caractérisé par** une caractéristique pour le déroulement de toutes les étapes d'une méthode selon l'une ou plusieurs des revendications précédentes.
